# EUROPEAN PATENT SPECIFICATION

(11) **EP 0 433 028 B1**
(45) Date of publication and mention of the grant of the patent: **14.02.1996**
(21) Application number: 90313469.0
(22) Date of filing: 11.12.1990
(51) Int. Cl.: B01D 24/22, B01D 24/46

(54) **Cellular filter comprising a moving back-wash system**
Zellenfilter mit einem bewegenden Rückspülsystem
Filtre à cellules comportant un système de lavage à contre-courant mobile

(30) Priority: 11.12.1989 GB 8927933
(43) Date of publication of application: 19.06.1991
(73) Proprietor: BRACKETT GREEN LIMITED, Essex C04 4PD (GB)
(72) Inventor: Cowley, Philip A., Ewhurst, Surrey GU6 7RX (GB)
(74) Representative: Blanco White, Henry Nicholas

(56) References cited:
- GB-A- 1 056 115
- US-A- 4 859 330

## Description

The invention relates to low head, cellular filters used for the treatment of liquids, and especially to such filters used for the treatment of water.

Currently, the cleaning of such filters is effected by the backwashing of the drainage outlets and filter beds using cleaned water that has been produced by the filtration process; in addition, mechanical raking of the filter bed surface and treatment of the biological growth with chemical cleaning agents will usually take place. It has been found that a disadvantage associated with the backwashing method is that the overall rate of cleaned water production is reduced. Furthermore, the use of chemical cleaning agents may make it necessary to modify the subsequent treatment process to take account of the presence of such agents.

An object of the invention is to provide a method of cleaning low head, cellular filters in which the above-mentioned conventional cleaning methods may be at least partially replaced.

GB-A-1 056 115 discloses a filter in which the filter bed lies on a porous plate, under which is a plenum divided into cells by a series of transverse walls. Each cell drains through an outlet in one side wall of the filter into a common effluent channel. A backwashing mechanism comprises a shoe that travels along the effluent channel, engaging and pumping filtered liquid back into the outlet of each cell in turn, and a hood that collects and pumps away liquid from the top of the filter bed above the cell in question.

US-A-4 859 330, on which the preamble of claim 1 is based, discloses a filter in which the filter bed is divided into a row of cells. Each cell has a horizontal manifold near the bottom of its filter bed, connected to a vertical riser. The cleaning means comprises a pair of hoods that engage the tops of adjacent cells. The first hood is open-topped and is associated with a source of compressed air that engages the riser so that air is forced into the manifold and escapes up through the filter bed and out through the open hood. The second hood is closed and has a suction pump that draws water up through the cell from an open plenum under all the cells.

The invention provides a filter for liquids comprising an upper part that is divided into a row of cells each containing a filter bed and a lower part separated from the upper part by a floor, the floor in each cell being provided with drainage means for cleaned liquid to drain from the filter bed into the lower part; and cleaning means that is mounted for movement along the row of cells and comprises two compartments that are arranged to fit over two adjacent filter cells for the removal of gas and/or liquid that has risen through each of those cells; characterised in that the said lower part of the filter is divided to form a lower part of each of the cells, in that the lower part of each cell is provided on one side with outlet means for drainage of cleaned liquid, the said outlet means being arranged in a row; and in that the cleaning means comprises a device movable along the row of outlet means for engagement with the outlet means of the said two adjacent filter cells, and to supply gas through the outlet means to the lower part of the said one of those filter cells and to supply liquid through the outlet means to the said lower part of the other of those two cells.

The gas used for cleaning the filter is preferably compressed air delivered by a compressor from the atmosphere surrounding the filter, to which the air (after separation from liquid and contaminants) may be released after use. For some purposes, however, it may be preferred to use an oxygen-enriched air mixture, or some other gas. The gas serves to dislodge impurities mechanically, by agitation of the bed, and if it is air or other oxygen-containing gas it may also oxidise those impurities that are of a biological nature. As a result of the air scour, it is usually possible to reduce the amount of clean water that has to be used for back-washing.

The means arranged to engage the said outlet means may comprise a device, commonly known as a "shoe", moveable along the row for engagement with the outlet means of each of those cell in turn, the shoe carrying means for delivering compressed air and water or other liquid under pressure, respectively, to two adjacent cells with which it is in engagement. Such means may, for example, comprise an air nozzle connected to an air compressor and a water outlet connected to a pump in a clean-water outlet from the filter. The shoe may be carried on a support to which it is connected by a mounting that includes a resilient element, allowing the shoe to tilt slightly so as to accommodate any unevenness in the said one sides of the filter cells.

The two compartments are preferably combined to form a single structure over two adjacent cells, and may then share a partition over at least a portion of their adjacent sides.

The outlet means may comprise a first port for engagement with the air nozzle and a second port below the first port for drainage of cleaned water.

Especially where the air nozzle is delivering air into a separate upper port of a cell, the nozzle is preferably arranged to deliver a jet of air that is narrower than the port, so that the air enters the cell without tending to escape between the shoe or other means supporting the nozzle and the cell wall.

It is advantageous for the drainage means of each cell to comprise a plurality of open-ended tubes extending downwardly from the underneath of the raised floor, so that an air cushion may develop below the floor, thus improving the uniformity of the distribution of the compressed air to the drainage means.

The compartment that fits over the said one filter cell may be provided with an outlet through which air forced upwards through the drainage means of the selected filter cell can escape. The outlet is advantageously in the form of one or more pipes rising above the water level in the cells and opening out ovver a washout trough.

The filter may comprise a pump to suck water from the said other filter cell through the respective compartment of the hood.

It is especially preferable for the cleaning means to be arranged so as to supply air and cleaned liquid to every filter cell.

Control means may be provided to ensure that each filter cell is periodically cleaned by the cleaning means.

The invention further provides a method of cleaning a filter for liquids as claimed in claim 1, characterised by the steps of (a) forcing gas upwards through the drainage means and the filter bed of a filter cell and removing the gas or permitting it to escape from the top of the filter cell; (b) simultaneously with step (a), causing cleaned liquid to flow upwards through the drainage means and the filter bed of an adjacent filter cell and pumping that liquid, together with an associated matter, away from the top of the filter cell; (c) advancing along the row of cells the cleaning means for the supply and removal of gas and liquid in steps (a) and (b); and (d) subjecting to step (b) the cell that was last subjected to step (a) and simultaneously subjecting the next adjacent cell to step (a).

The gas is preferably compressed air, and the passage of the compressed air upwards through the drainage means and filter bed serves to oxidise and thus remove any biological growth blocking the filter. In addition, as well as removing some of the unwanted matter from the filter entirely, the air flow also causes such remaining matter to become loosened so that, when cleaned water is subsequently forced upwards through the drainage means of the same filter cell, that matter can be pumped away from the top of the filter cell together with that water.

It is possible for the cleaning means to be advanced, and the water (or other liquid) wash of a cell to commence, immediately the air-cleaning of that cell is completed. In that case, the air cushion trapped under the floor tends to be swept up through the cell with the first of the water, giving an extremely vigorous wash, which may be desired for some purposes. It is found in practice, however, that such vigorous washing tends to result in a significant loss of the bed medium with the dirty water, and it is therefore preferred to stop the air-washing and disperse the air cushion before advancing the cleaning means. For that purpose, the lower part of the cell, under the cell floor, may be vented to atmosphere. Instead, the lower part may be open below the level of the air inlet nozzle to the clean water in the outlet from the filter, for example, through the lower portion of the outlet means being left open, and the air can then escape up through the drainage means and the bed of the cell, the air cushion being replaced by inflowing clean water. The water-washing of the other cell preferably continues while the air cushion in the one cell is dispersing.

Ideally each filter cell is cleaned in turn.

Various forms of filter constructed in accordance with the invention will now be described in greater detail by way of example only, with reference to the accompanying drawings, in which:
Figure 1 is a sectional view through a low head, cellular filter;
Figure 2 is a schematic sectional view on the line 2-2 of Figure 1, showing how cleaning of the filter is effected;
Figure 3 is a top plan view, partly in cross-section, of a shoe forming part of the filter, to a larger scale than Figure 2;
Figure 4 is a rear elevation view, partly cut away, of the shoe shown in Figure 3;
Figure 5 is an axial cross-section through an air nozzle forming part of the shoe, to a larger scale than Figures 3 and 4;
Figure 6 is a rear elevation view of a sole plate forming part of an alternative form of shoe; and
Figure 7 is a side elevation view, partly in section, of an alternative form of a nozzle forming part of the filter.

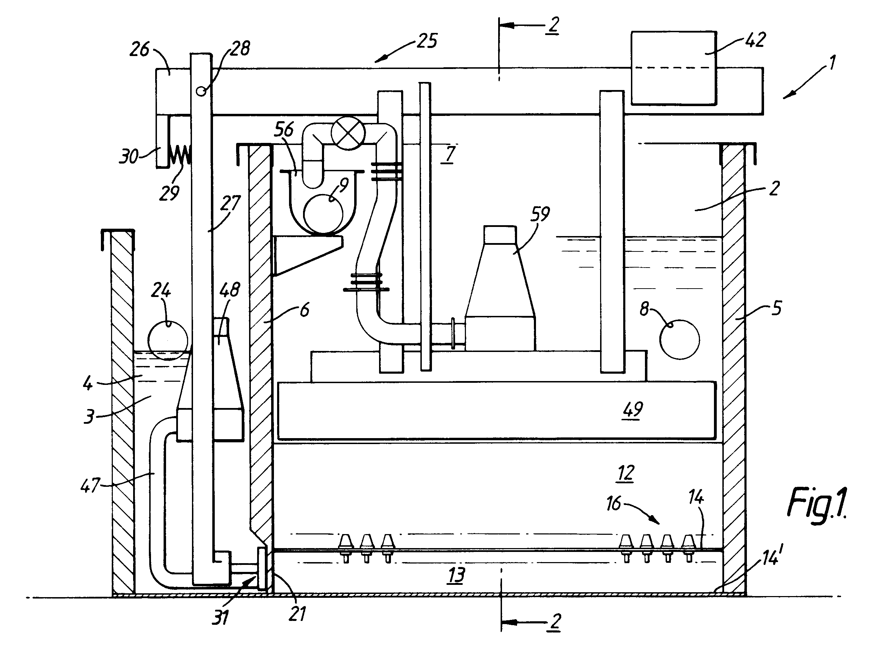

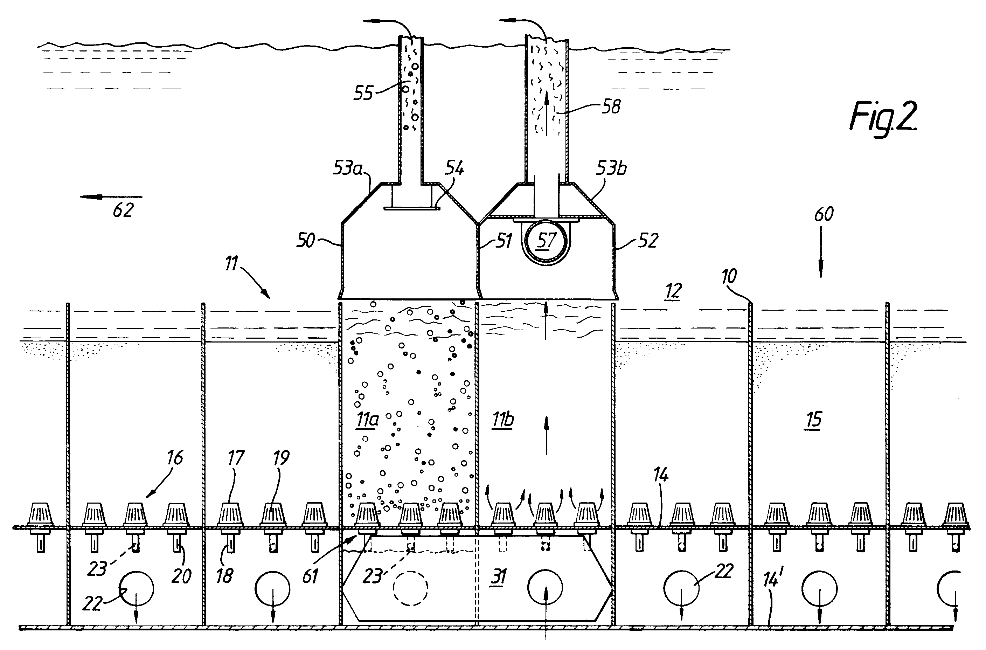

Referring to the accompanying drawings, and initially to Figures 1 and 2, one form of low head, cellular filter according to the invention, indicated generally by the reference numeral 1, is for use in the water treatment industry for water purification, tertiary sewage treatment, or the like. The filter 1 comprises a filter tank 2 and a clean water channel 3 in which water 4 cleaned by the filter collects.

One side wall 5 of the filter tank 2 is exposed, the opposite side wall 6 separating the filter tank 2 from the clean water channel 3. One end wall 7 of the filter tank 2 is provided with a water inlet 8 halfway up the tank and a water outlet 9 near the top of the tank. A control box (not shown) is situated on the other end wall (not shown) of the filter 1 and a raised walkway (also not shown) may surround the filter for manual inspection of the filter.

The bottom half of the filter tank 2 is divided by a number of transverse partitions 10 into filter cells, indicated generally by the reference number 11, arranged side by side, with the longer dimension of each cell extending the width of the filter tank and one end of each cell separated only by the side wall 6 from the clean water channel 3. Each cell 11 is divided into an upper part 12 and a lower part or plenum 13 by a raised horizontal floor 14, positioned one-third of the height of the filter cell 11 from a structural floor 14′ of the filter 1; the plenum 13 is fully enclosed. A filter bed 15 occupies about 4/5 of the height of each upper part 12, being supported by the raised floor 14; the filter bed may comprise sand or another conventional filter medium.

Three symmetrically spaced parallel rows of nozzles, indicated generally by the reference number 16, are arranged lengthwise in the raised floor 14 of each cell. Each nozzle 16 comprises an upright frustoconical cap 17, the bottom edge of which rests on the upper surface of the raised floor 14, and a short, open-ended tube 18 that extends downwardly from the underside of the raised floor 14, the tubes 18 all being identical in length. The frustoconical surface of the cap 17 is perforated with narrow slits 19 through which water can flow into the tube 18 but through which the sand or other filter medium 15 cannot pass. The slits 19 may, for example, be 0.5 mm wide for a sand filter. The tube 18 of each nozzle 16 has in it a vertical slot 20 which may be, for example, 35 mm long and 1.5 mm wide. A bottom portion 21 of the side wall 6 of the filter tank, below the level of the raised floor 14, is reduced in thickness and is faced on the side towards the clean water channel 3 with a low-friction material, for example, the ultra-high-density polyethylene material sold under the trade-name "Klingerdur".

The wall portion 21 contains one or two rows of ports 22 and 23, with each cell 11 having a first port 22 approximately midway between the floors 14 and 14′, and optionally also a much smaller second port 23 above the top of the first port 22 and just above the level of the bottoms of the tubes 18 of the nozzles 16. Each cell 11 also has a vent pipe (not shown), leading upwards from the plenum 13, immediately below the nozzle floor 14, to open out above the water level in the clean water channel 3.

The clean water channel 3, lying across the ends of the filter cells 11, is provided with a cleaned water outlet 24 at the same height as the filter tank inlet 8.

The filter tank 2 is spanned by a bridge, indicated generally by the reference number 25, with wheels (not shown) that run on rails along the tops of the walls 5 and 6 of the filter tank 2, and can be propelled along the filter tank by an electric motor. The running gear may be conventional and, in the interests of clarity and simplicity, will not be further described. One end portion 26 of the bridge 25 overhangs the clean water channel 3, and a pair of arms 27, mounted on the portion 26 of the bridge by means of pivots 28, extend downwards almost to the bottom of the clean water channel. Compression springs 29 act between the arms 27 and abutments 30 on the bridge, urging the arms to pivot towards the wall 6, counterclockwise as seen in Figure 1.

On the lower ends of the arms 27 is mounted a shoe indicated generally by the reference number 31. The shoe 31 comprises a horizontal crossbar 32, rigidly connected to both of the arms 27, and a sole plate 33 that is faced with a panel 34 of low-friction material, which may be the same as that used for the bottom portion 21 of the wall 6, and lies flat against the wall portion 21. In the centre of the crossbar 32 is fixed a guide sleeve 35 in which a guide rod 36 is slidable in a direction perpendicular to the wall 6. The guide rod 36 is attached to the sole plate 33 through an elastomeric mounting 37, similar in construction to a conventional antivibration mounting, which allows the sole plate to tilt through a small angle in any direction relative to the crossbar 32, in order to adapt to any unevenness in the wall portion 21. The sole plate 33 is urged away from the crossbar 32, and into contact with the wall portion 21, by four compression springs 38, positioned above and below the centre of the shoe towards both ends, the forces of which are individually adjustable by screwing in or out bolts 39 that provide the abutments of the springs to the crossbar 32.

The area of the sole plate 33 is such that the sole plate can cover the two ports 22, and also the two ports 23 of if those are provided, of two adjacent filter cells 11 simultaneously.

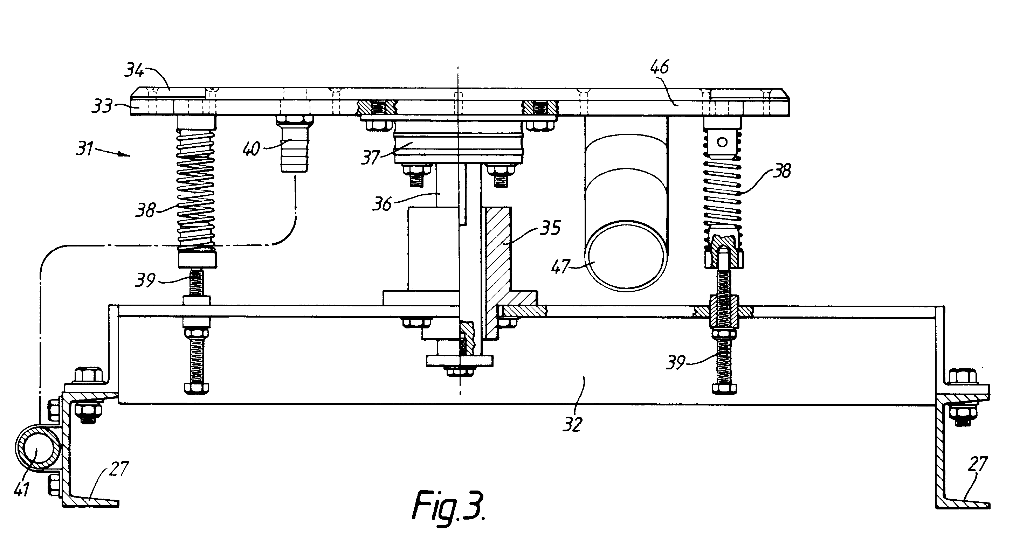

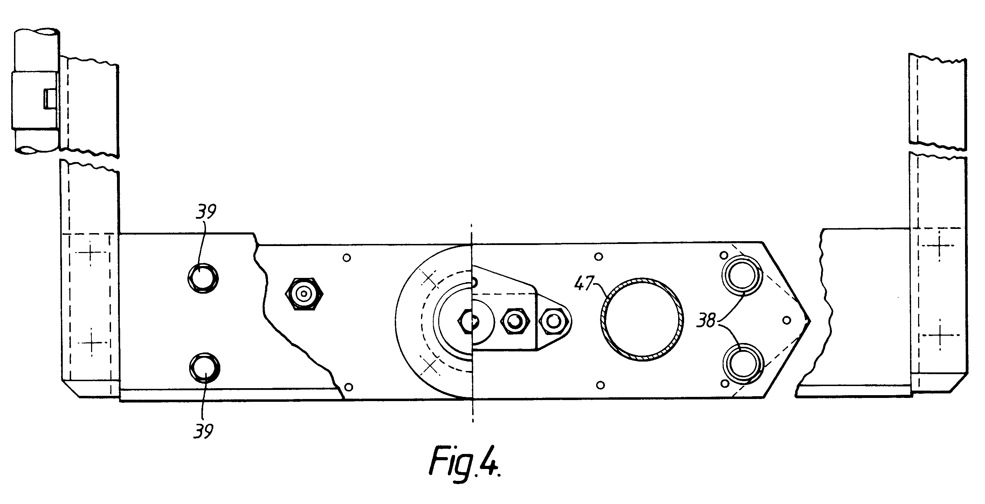

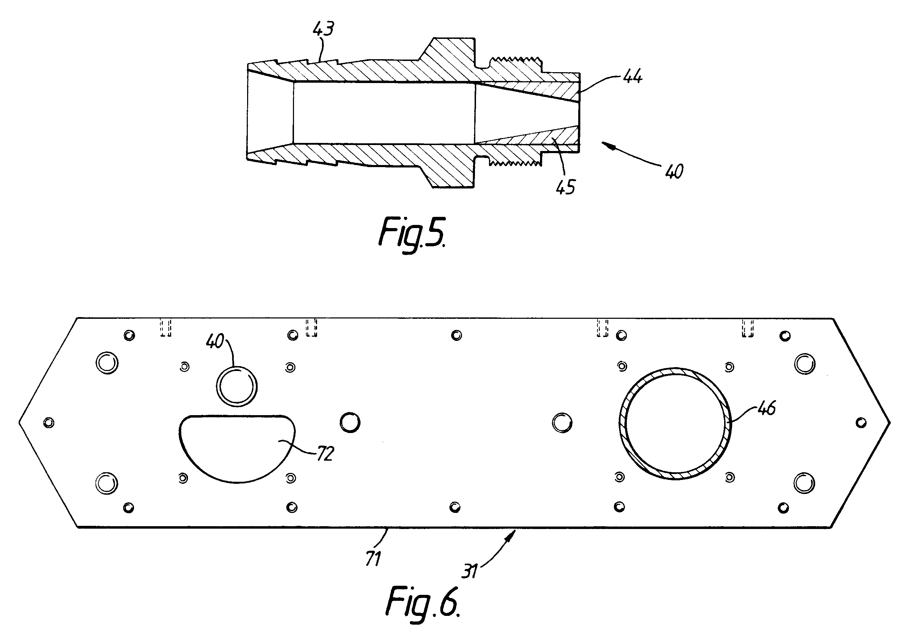

The left-hand half of the sole plate 33 (as seen in Figs. 2 to 4) is provided with an air-jet nozzle, indicated generally by the reference number 40, connected by piping 41 to an air compressor 42 mounted on the bridge 25. The position of the air-jet nozzle 40 corresponds to that of the smaller port 23 of each cell 11, if those ports are provided, so that the nozzle can engage with the port 23 of a particular cell 11a when the shoe is in an operative position as shown in Figure 2; the remainder of the left-hand half of the sole plate 33 is smooth and serves to seal off the port 22 of the same cell 11a. If separate upper ports 23 are not provided, then the position of the air-jet nozzle 40 corresponds (as shown in Fig. 4) to a position within, and near the top of, the port 22. As may be seen from Figure 5, the nozzle 40 has at one end a conventional attachment 43 for the piping 41 and at the other end a flat face 44 which is flush with the low-friction surface 34 of the sole-plate 33. Inside the nozzle 40, there is an insert 45 with a frustoconical inner surface that causes the air passage through the nozzle 40 to narrow to a minimum at the face 44.

The right-hand half of the sole plate 33 is provided at a position corresponding to that of the port 22 with an outlet 46 so shaped that, when the shoe is in an operative position, the outlet is in register with the port 22 of the filter cell 11b that is immediately to the right of the first cell 11a. The outlet 46 is in communication through a pipe 47 with the outlet of a centrifugal pump 48 which is partly submerged in, and takes in water from, the clean water channel 3. The pump 48 is suspended from the bridge 25.

A hood, indicated generally by the reference number 49, is suspended from the bridge 25 over the filter cells 11. The hood 49 has three walls 50 to 52 extending across the filter bed 2 and defining between them two compartments 53a and 53b, and end walls (not shown). The hood walls have the same configuration as the top edges of the walls of two adjacent filter cells 11, except that the bottom edge portions are angled. The outer walls of the hood are angled slightly outwards so that they overhang beyond the corresponding cell walls 10, while the wall 51 between the two compartments 53a and 53b of the hood 49 is so angled that the hood compartment 53a overhangs the cell 11b. When the hood 49 is correctly positioned in an operative position over a pair of cells 11a and 11b, there may be a gap about 1 cm wide between each wall of the hood and the corresponding cell wall. The shoe 31 and the hood 49 are level so that, in their operative positions, they are both in register with the same two filter cells 11. The top of the first hood compartment 53a opens out past a baffle plate 54 into a duct 55 that opens out into a washout trough 56. An apertured collecting pipe 57 extends the length of the second hood compartment 53b and opens into a duct 58 leading to the inlet of a wash pump 59 which discharges into the washout trough 56. The duct 55 of the left-hand hood compartment 53a (as shown in Figure 2) is smaller in cross-section. The washout trough 56 extends the length of the filter tank 2 and drains through the outlet 9.

During operation of the filter 1, water 60 requiring filtration is pumped into the tank 2 through the inlet 8. The head of water above the filter cells 11 may be variable, but should be above the tops of the walls 10. The water 60 passes slowly down through the filter bed 15, suspended impurities being retained by the filter bed. The filtered water 4 reaches the bottom of the filter bed 15 and is then able to drain from the filter bed through the nozzles 16, passing into the plenums 13 of the filter cells and subsequently into the cleaned water channel 3 via the ports 22.

Continued operation of the filter tank 2 causes filtered impurities to build up in the filter bed 15 and on the top surface thereof; more importantly, debris and biological growth accumulates in the nozzles 16. Hence, in order to maintain the efficiency of the filter 1 it is necessary for periodical cleaning to be carried out.

The cleaning sequence is as follows:

When the shoe 31 is in an operative position, for example, abutting two adjacent filter cells 11a and 11b, it lies with its sole plate 33 against the wall portion 21 under the action of the springs 29 and 38, and with its air nozzle 40 in line with the second port 23, or with an upper portion of the port 22, as the case may be, of one cell 11a and its water outlet 22 in line with the first port 22 of the other cell 11b. The surface 34 of the sole plate 33 closes off the first port 22 of the one cell 11a and the second port 23 (if present) of the other cell 11b.

Compressed air is then pumped by the compressor 42 through the nozzle 40 into the port 22 or 23 of the filter cell 11a. Because of the insert 45 in the nozzle, the air comes out of the nozzle in a jet that is narrower than the port 23 and enters the port without tending to escape between the abutting faces of the sole plate 33 and the wall portion 21. An air cushion 61 of trapped air forms in the top of the plenum 13 of the cell 11a. Once the level of the cleaned water 4 in the plenum 13 has been lowered to expose the slots 20 in the tubes 18 by increasing the air pressure, air can escape upwards through the tubes into the nozzles 16. The density of the filter bed 15 allows the air to escape only slowly and, together with the presence of the air cushion 61, ensures that there is an even distribution of compressed air across the underside of the floor 14 so that roughly equal amounts of air pass through each of the nozzles 16 for cleaning thereof. It has been found that passing one bed volume of air (measured at atmospheric pressure) into the bed over a period of 30 seconds produces a satisfactory cleaning effect. The volume of air delivered by the compressor 42 must of course be greater than that to allow for the amount of air that escapes through the vent pipe. The air bubbles up through the filter bed 15, agitating the sand and both mechanically removing impurities and oxidising those impurities that are of a biological nature. The air, together with a certain amount of water and entrained solid matter, then escapes up the duct 55 to the washout trough 56. The baffle plate 54 reduces the amount of sand from the filter bed that is lost through the duct 55, while allowing the matter of which the bed is being cleaned to escape.

Because of the outwardly angled edge portions of the walls 50 and 51 of the hood compartment 53a, no air escapes through the gaps between those walls and the walls 10 of the cell 11a; instead, water is drawn in through the gap. After the air cleaning step has been completed, the shoe 31 and hood 53a remain in alignment with the particular cell 11a while the air cushion 61 escapes through the vent pipe. That is necessary to avoid the air's entering the second hood compartment 53b and thence reaching the wash pump 59, especially if the wash pump is not self-priming. The air cushion 61 could instead be allowed to escape through the port 23 and the piping 41 if the port 23 were positioned nearer to the top of the plenum 13.

The direction of travel of the shoe 31 during cleaning of the cells is designated by an arrow 62 in Figure 2, the shoe moving from right to left, in steps of the width of a single filter cell 11. Hence, in its previous operative position the shoe 31 subjected the adjacent filter cell 11b to air cleaning, thereby dislodging much of the dirt and other undesired matter in the filter cell 11b. While the air purge of filter cell 11a is occurring, the adjacent filter cell 11b is simultaneously backwashed so as to remove the dirt, which dirt is now much more readily removed than would otherwise be the case. The pump 48 in the clean water channel 3 is activated during backwashing so as to pump cleaned water 4 via the shoe 31 and the port 22 into the lower part of the filter cell 11b, and subsequently up through the nozzles 16 and the filter bed 15. The water and transported dirt, biological matter, and so on are removed by suction from the top of the filter cell 11b into the duct of hood compartment 53b where they are collected by the perforated pipe 57 and drawn up the duct 58 by the wash pump 59, which then discharges them into the washout trough 56.

Once the shoe 31 has completed both the air cleaning of the filter cell 11a and the backwashing of the filter cell 11b, the bridge 25 carries the shoe and the hood 49 the width of one filter cell to the left, with the low-friction surface 34 on the sole plate 33 sliding over that on the wall portion 21, before once more stopping in an operative position, in which backwashing of the cell 11a and air cleaning of the next cell to the left can take place.

The sequence of cleaning may be controlled by a programmable timer in the control box, in combination with a sensor on the bridge 25 that detects when the shoe 31 and hood 49 are correctly aligned in an operative position. The sensor may be, for example, a switch on the bridge that engages a peg fixed level with each cell. When the cleaning device is not in use, it is preferably parked at one end of the filter in a position where it does not obstruct any of the cells 11, and where it is accessible for routine maintenance to a person standing on, for example, a ladder (not shown) mounted on the outside of that end of the filter.

Referring now to Fig. 6, in an alternative form of filter the sole plate 71 of the shoe 31 has a generally semi-circular aperature 72 below the air-jet nozzle 40. The cells 11 are not provided with vent pipes from their plenums 13, and do not have separate air inlet ports 23. The construction of the filter may be otherwise the same as the filter shown in Figs. 1 to 5. When the shoe is in an operative position during the cleaning operation, the air-jet nozzle 40 is aligned with an upper portion of the port 22 of one cell 11a, the aperture 72 is aligned with the lower half of the same port 22, and the cleaning water outlet 46 of the shoe is aligned with the port 22 of the adjacent cell 11b, as described above. Compressed air is then pumped through the nozzle 40 into the port 22 of the filter cell 11a, and forms an air cushion 61 in the plenum 13 above the level of the top of the aperture 72. Air escapes from the plenum upwards through the nozzles 16 and the bed 15 as described above. Simultaneously, the adjacent cell 11b is backwashed with water. After a suitable period, which may typically be between 20 and 40 seconds, the air pump 42 is stopped, while water washing of the adjacent cell 11b continues for a further 20 to 40 seconds. During that period, the air cushion 61 in the plenum 13 escapes upwards through the nozzles 16, and is replaced by water flowing in through the aperture 72. Thus, when the bridge advances and the cell 11a in its turn is backwashed with water, there is substantially no air remaining in the plenum to be swept up by the wash-water.

It will be appreciated that other alternative forms of shoe may be employed, depending on the type of filter. Although in the particular embodiment described the filter cells are all sealed at one end by a common side wall 6 provided with a plurality of ports, the part of that side wall below the floor 14 could be dispensed with if the shoe itself was arranged to close off the ends of the plenums 13 of those filter cells that were being cleaned.

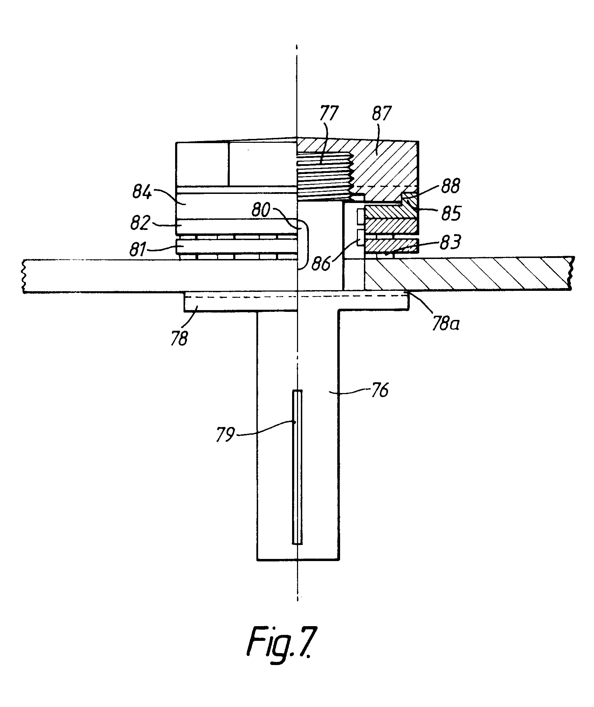

Referring now to Fig. 7, an alternative form of the nozzles in the bed floor 14 is indicated. Each nozzle 75 comprises an open-ended central tube 76 that projects above and below the floor 14 and has a screw-threaded top end portion 77 and a flange 78 that rests against the underside of the floor 14. The tube 76 has a vertical slot 79, similar to the slot 20, in its lower portion, and apertures 80 in its upper portion. Small vents 78a are also provided in the upper face of the flange 78. Round the tube 76, on top of the floor 14, are placed two rings 81 and 82, one on top of the other. Each ring 81 and 82 has a flat upper surface and has a ring of projecting teeth 83, which may be 0.4 mm high, on its lower face, so that there is an open radial slot under each ring. On top of the upper toothed ring 82 is a spacer ring 84 with a raised flange 85 round the outer edge of its upper face. The rings 81, 82, and 84 have lugs 86 projecting vertically inside each other's inner rims, maintaining the three rings coaxial. A hexagonal cap 87 is screwed onto the threaded portion 77 of the tube 76, clamping down the rings 81, 82, and 84, and has an outwardly-facing shoulder 88 that engages the flange 85 to centre the stack of rings, which then define an annular space between them and the tube 76. During filtering, water flows in through the slots under the rings 81 and 82, and out through the slot 79 or through the open bottom end of the tube 76. During cleaning, air or water flows in the opposite direction. The nozzle 75 may be used in place of the nozzle 16 described above, and is found to give better results under at least some condition of use.

As an example of suitable dimensions, the filter bed may be divided into 14 compartments, each approximately 2m in length, 2/3m in height, and 1/3m in width, and the clean water channel 3 may be approximately 2/3m in width. The linear flow rate of water down through the bed may be typically 5m/min, up to a maximum of 10m/min. Such a bed may need cleaning every 4 to 6 hours.

## Claims

1. A filter (1) for filtering liquids (4) comprising an upper part (12) that is divided into a row of cells (11) each containing a filter bed (15) and a lower part (13) separated from the upper part by a floor (14), the floor (14) in each cell (11) being provided with drainage means (16) for cleaned liquid (4) to drain from the filter bed into the lower part; and cleaning means (25-59) that is mounted for movement along the row of cells and comprises two compartments (53a, 53b) that are arranged to fit over two adjacent filter cells (11a, 11b) for the removal of gas and/or liquid that has risen through each of those cells; characterised in that the said lower part of the filter (1) is divided to form a lower part (13) of each of the cells (11), in that the lower part (13) of each cell is provided on one side (6, 21) with outlet means (22, 23) for drainage of cleaned liquid (4), the said outlet means (22, 23) being arranged in a row; and in that the cleaning means comprises a device (31) movable along the row of outlet means for engagement with the outlet means (22, 23) of the said two adjacent filter cells (11a, 11b), and to supply gas through the outlet means (22, 23) to the lower part (13) of the said one (11a) of those filter cells and to supply liquid through the outlet means (22, 23) to the said lower part (13) of the other (11b) of those two cells.

2. A filter as claimed in claim 1, wherein the outlet means comprises a first port (23) for engagement with means (40) to supply gas forming part of the device (31) to supply gas and liquid and a second port (22) below the first port for drainage of cleaned liquid (4), and the second port is preferably a hole that is sealable by the cleaning means (33).

3. A filter as claimed in claim 1, wherein the outlet means of each cell comprises a single port (22), and the device to supply gas and liquid comprises a member (71) that closes off at least an upper portion of that port through which the gas can be supplied (40).

4. A filter as claimed in any one of claims 1 to 3, wherein the drainage means (16) of each cell (11) comprises a plurality of open ended tubes (18, 76) extending downwardly from the underside of the said floor.

5. A filter as claimed in any one of claims 1 to 4, wherein the compartment (53a) that is arranged to fit over the said one filter cell (11a) is provided with an outlet (55) through which gas forced upwards through the drainage means (16) of that filter cell can escape.

6. A filter as claimed in any one of claims 1 to 5, comprising a pump (59) to suck liquid from the said other filter cell (11b) through the respective said compartment (53b).

7. A filter as claimed in any one of claims 1 to 6, wherein the cleaning means is so arranged that it can supply gas and cleaned liquid to every filter cell (11), and wherein control means is preferably provided to ensure that each filter cell (11) is periodically cleaned by the cleaning means.

8. A filter as claimed in any one of claims 1 to 7, for filtering water (4).

9. A method of cleaning a filter for filtering liquids as claimed in claim 1, characterised by the steps of (a) forcing gas upwards through the drainage means (16) and the filter bed (15) of a filter cell (11) and removing the gas or permitting it to escape from the top of the filter cell; (b) simultaneously with step (a), causing cleaned liquid to flow upwards through the drainage means (16) and the filter bed (15) of an adjacent filter cell (11) and pumping (59) that liquid, together with an associated matter, away from the top of the filter cell; (c) advancing along the row of cells the cleaning means (25 to 59) for the supply and removal of gas and liquid in steps (a) and (b); and (d) subjecting to step (b) the cell (11) that was last subjected to step (a) and simultaneously subjecting the other adjacent filter cell (11) to step (a).

10. A method as claimed in claim 9, wherein all of the filter cells (11) of the filter (1) are cleaned in turn, and including the initial step of performing step (a) on the first cell and the final step of performing step (b) on the last cell.

## Patentansprüche

1. Filter (1) für das Filtern von Flüssigkeit (4), umfassend einen oberen Teil (12), der in eine Reihe von Zellen (11) unterteilt ist, welche jede ein Filterbett (15) enthalten, und einen unteren Teil (13), von dem oberen Teil durch einen Boden (14) getrennt, wobei der Boden (14) in jeder Zelle (11) mit Drainagemitteln (16) für gereinigte Flüssigkeit (4) zum Ablauf aus dem Filterbett in den unteren Teil versehen ist; und Reinigungsmittel (25-59), die für eine Bewegung längs der Reihe von Zellen angeordnet sind und zwei Abteile (53a, 53b) umfassen, die ausgebildet sind, um über zwei benachbarte Filterzellen (11a, 11b) zu passen für das Austragen von Gas und/oder Flüssigkeit, die durch jede dieser Zellen aufgestiegen sind; dadurch gekennzeichnet, daß der untere Teil des Filters (1) unterteilt ist zur Bildung von einem unteren Teil (13) in jeder der Zellen (11), daß der untere Teil (13) jeder Zelle auf einer Seite (6, 21) mit Auslaßmitteln (22, 23) für den Austrag von gereinigter Flüssigkeit (4) versehen ist, welche Auslaßmittel (22, 23) in einer Reihe angeordnet sind, und daß die Reinigungsmittel eine längs der Reihe von Auslaßmitteln bewegliche Einrichtung (31) für den Kontakt mit den Auslaßmitteln (22, 23) der genannten zwei benachbarten Filterzellen (11a, 11b) umfaßt, und für die Zufuhr von Gas durch das Auslaßmittel (22, 23) in den unteren Teil (13) der genannten einen (11a) jener Filterzellen und Zufuhr von Flüssigkeit durch die Auslaßmittel (22, 23) im unteren Teil (13) der anderen (11b) jener beiden Zellen.

2. Ein Filter nach Anspruch 1, bei dem die Auslaßmittel eine erste Öffnung (23) für Kontakt mit Gaszufuhrmitteln (40) umfassen, die einen Teil der Einrichtung (31) für die Zufuhr von Gas und Flüssigkeit bilden, und eine zweite Öffnung (22) unter der ersten Öffnung für den Ablauf von gereinigter Flüssigkeit (4) umfassen, wobei die zweite Öffnung vorzugsweise ein Loch ist, das mittel der Reinigungsmittel (33) abdichtbar ist.

3. Ein Filter nach Anspruch 1, bei dem die Auslaßmittel jeder Zelle eine einzige Öffnung (22) umfassen, und die Einrichtung für die Zufuhr von Gas und Flüssigkeit ein Bauteil (71) umfaßt, die zumindest einen oberen Abschnitt jener Öffnung absperrt, durch welche Gas (40) zugeführt werden kann.

4. Ein Filter nach einem der Ansprüche 1 bis 3, bei dem die Drainagemittel (16) jeder Zelle (11) eine Mehrzahl von offenendigen Rohren (18, 76) umfassen, die sich nach unten von der Unterseite des Bodens erstrecken.

5. Ein Filter nach einem der Ansprüche 1 bis 4, bei dem das Abteil (53a), das ausgebildet ist, um über die eine Filterzelle (11a) zu passen, mit einem Auslaß (55) versehen ist, durch welchen Gas, das durch die Drainagemittel (16) der betreffenden Filterzelle aufwärts gepreßt wird, entweichen kann.

6. Ein Filter nach einem der Ansprüche 1 bis 5, umfassend eine Pumpe (59) zum Absaugen von Flüssigkeit aus der anderen Filterzelle (11b) durch das entsprechende Abteil (53b).

7. Ein Filter nach einem der Ansprüche 1 bis 6, bei dem die Reinigungsmittel so ausgebildet sind, daß sie Gas und gereinigte Flüssigkeit jeder Filterzelle (11) zuführen können, und bei dem vorzugsweise Steuermittel vorgesehen sind, um sicherzustellen, daß jede Filterzelle (11) periodisch von den Reinigungsmitteln gereinigt wird.

8. Ein Filter nach einem der Ansprüche 1 bis 7 für das Filtern von Wasser (4).

9. Ein Verfahren zum Reinigen eines Filters für das Filtern von Flüssigkeiten nach Anspruch 1, gekennzeichnet durch die Schritte: a) Pressen von Gas nach oben durch die Drainagemittel (16) und das Filterbett (15) einer Filterzelle (11) und Austrag des Gases oder sein Entweichenlassen von der Oberseite der Filterzelle; (b) gleichzeitig mit Schritt (a) Bewirken, daß gereinigte Flüssigkeit aufwärts durch die Drainagemittel (16) und das Filterbett (15) einer benachbarten Filterzelle (11) fließt, und Abpumpen (59) jener Flüssigkeit, zusammen mit angelagertem Feststoff, weg von der Oberseite der Filterzelle; (c) Verlagern der Reinigungsmittel (25 bis 59) längs der Reihe von Zellen für die Zufuhr und den Austrag von Gas und Flüssigkeit in Schritten (a) und (b); und (d) Unterwerfen der Zelle (11), die als letzte dem Schritt (a) unterworfen worden war, dem Schritt (b) und gleichzeitiges Unterwerfen der anderen benachbarten Filterzelle (11) dem Schritt (a).

10. Ein Verfahren nach Anspruch 9, bei dem alle Filterzellen (11) des Filters (1) im Kreislauf gereinigt werden, und einschließlich des Anfangsschritts der Ausführung des Schrittes (a) bei der ersten Zelle und des Endschrittes der Ausführung des Schrittes (b) bei der letzten Zelle.

## Revendications

1. Filtre (1) pour la filtration de liquide (4), comprenant une partie supérieure (12) qui est divisée en une série de cellules (11) contenant chacune un lit filtrant (15) et une partie inférieure (13) séparée de la partie supérieure au moyen d'un plancher (14), le plancher (14) dans chaque cellule (1) étant pourvu de moyens de drainage (16) pour le liquide (4) purifié, permettant le drainage à partir du lit filtrant jusque dans la partie inférieure ; et des moyens de purification (25-59) qui sont montés de manière à être déplacés le long de la série de cellules et comprennent deux compartiments (53a, 53b) qui sont agencés de manière à s'adapter au-dessus de deux cellules de filtrage adjacentes (11a, 11b) qui permettent d'éliminer le gaz et/ou le liquide qui s'est élevé au travers de ces cellules ; caractérisé en ce que ladite partie inférieure du filtre (1) est divisée de manière à former une partie inférieure (13) de chacune de ces cellules (11), en ce que la partie inférieure (13) de chaque cellule est pourvue sur un coté (6, 21) de moyens d'échappement (22, 23) permettant le drainage du liquide purifié (4), lesdits moyens d'échappement (22, 23) étant disposés en ligne ; et en ce que les moyens de purification comprennent un dispositif (31) mobile le long de la série de moyens d'échappement pour permettre la coopération avec les moyens d'échappement (22, 23) des deux dites cellules de filtrage adjacentes (11a, 11b), et de manière à fournir du gaz à travers les moyens d'échappement (22, 23) à la partie inférieure (13) de l'une (11a) desdites cellules de filtration, et de manière à fournir du liquide à travers les moyens d'échappement (22, 23) à ladite partie inférieure (13) de l'autre (11b) de ces deux cellules.

2. Filtre selon la revendication 1, caractérisé en ce que les moyens d'échappement comprennent un premier orifice (23) permettant l'engagement de moyens (40) en vue de fournir du gaz, faisant partie du dispositif (31), de manière à fournir du gaz et du liquide, et un second orifice (22) au-dessous du premier orifice (23), permettant le drainage du liquide purififé (4), et en ce que le second orifice est, de préférence, un trou qui peut être rendu étanche par l'intermédiaire des moyens de purification (33).

3. Filtre selon la revendication 1, caractérisé en ce que les moyens d'échappement de chaque cellule comprennent un orifice unique (22) et en ce que le dispositif permettant de fournir du gaz et du liquide, comprend un élément (71) qui obture au moins une portion supérieure de cet orifice au travers de laquelle le gaz est susceptible d'être fourni (40).

4. Filtré selon l'une quelconque des revendications 1 à 3, caractérisé en ce que les moyens de drainage (16) de chaque cellule (11), comprennent une pluralité de tubes à extrémité ouverte (18, 76) s'étendant vers le bas à partir de la face inférieure dudit plancher.

5. Filtre selon l'une quelconque des revendications 1 à 4, caractérisé en ce que le compartiment (53a) qui est agencé de manière à s'adapter au-dessus de l'une (11a) desdites cellules de filtrage, est pourvu d'un orifice de sortie (55) à travers lequel peut s'échapper le gaz qui subit un mouvement forcé vers le haut au travers des moyens de drainage de cette cellule de filtrage.

6. Filtre selon l'une quelconque des revendications 1 à 5, comprenant une pompe (59) permettant d'aspirer le liquide à partir de l'autre (11b) desdites cellules de filtrage à travers ledit compartiment respectif (53b).

7. Filtre selon l'une quelconque des revendications 1 à 6 caractérisé en ce que les moyens de purification sont disposés de telle sorte qu'ils peuvent fournir du gaz et du liquide purifié à toutes les cellules de filtrage (11), et en ce qu'un moyen de commande est, de préférence, prévu de manière à assurer la purification périodique de chaque cellule de filtrage (11) par l'intermédiaire des moyens de purification.

8. Filtre selon l'une quelconque des revendications 1 à 7, permettant la filtration de l'eau (4).

9. Procédé de purification d'un filtre pour la filtration de liquide selon la revendication 1, caractérisé par les étapes consistant à :
(a) - mettre le gaz en mouvement forcé vers le haut à travers les moyens de drainage (16) et le lit filtrant (15) d'une cellule de filtrage (11), et éliminer le gaz ou lui permettre de s'échapper à partir du sommet de la cellule de filtrage ;
(b) - de manière simultanée avec l'étape (a), forcer le liquide purifié à s'écouler vers le haut à travers le moyen de drainage (16) et le lit filtrant (15) d'une cellule de filtration adjacente (11), et pomper (59) ce liquide, en même temps qu'une manoeuvre associée, de manière à le chasser du sommet de la cellule de filtrage ;
(c) - Faire avancer, le long de la série de cellules, les moyens de purification (25 à 59), pour la fourniture et l'élimination du gaz et du liquide dans les étapes (a) et (b) ; et
(d) - soumettre à l'étape (b) la cellule (11) qui a été soumise en dernier à l'étape (a) et, simultanément, soumettre l'autre cellule de filtrage adjacente (11) à l'étape (a).

10. Procédé selon la revendication 9, caractérisé en ce que toutes les cellules de filtrage (11) du filtre (1) sont nettoyées à tour de rôle, le procédé incluant l'étape initiale de l'étape (a) sur la première cellule et l'étape finale de l'étape (b) sur la dernière cellule.
